# EUROPÄISCHE PATENTSCHRIFT

(11) **EP 1 134 468 B1**
(45) Veröffentlichungstag und Bekanntmachung des Hinweises auf die Patenterteilung: **25.01.2006**
(21) Anmeldenummer: 00116927.5
(22) Anmeldetag: 05.08.2000
(51) Int. Cl.: F16K 27/04

(54) **Sanitärarmatur**
Sanitary fitting
Armature sanitaire

(30) Priorität: 09.03.2000 DE 10011505
(43) Veröffentlichungstag der Anmeldung: 19.09.2001
(73) Patentinhaber: Hansgrohe AG, 77761 Schiltach (DE)
(72) Erfinder: Ginter, Gerhard, 78144 Tennenbronn (DE); Orlandi, Alessio, 6917 Barbengo (CH); Riester, Patrik, 77709 Wolfach/Kirnbach (DE)
(74) Vertreter: Patentanwälte Ruff, Wilhelm, Beier, Dauster & Partner

(56) Entgegenhaltungen:
- DE-A1- 3 726 436
- DE-A1- 4 002 852
- DE-U1- 8 908 214
- ES-A1- 2 150 836
- US-A- 4 103 709
- US-A- 5 685 341

## Beschreibung

Sanitärarmaturen bestehen üblicherweise aus einem Armaturengrundkörper, der beispielsweise aus Messingguss besteht. Es sind auch schon Armaturen vorgeschlagen worden, bei denen der Armaturengrundkörper als Blechteil oder aus Kunststoff ausgebildet ist. Der Armaturengrundkörper bildet bei den bekannten Sanitärarmaturen gleichzeitig auch die Außenform.

Es ist bereits eine Einloch-Einhebelmischarmatur bekannt (DE-C2-3243750), bei der ein aus Guß bestehendes Batteriegehäuse einen außen im wesentlichen zylindrisch ausgebildeten Bereich aufweist, in den Verbindungskanäle münden. Dieser Bereich wird von einem Ring abgedeckt, in dem ein Absperrventil angeordnet ist, das zu einer getrennten Geräteanschlußleitung führt.

Ebenfalls bekannt ist eine Einloch-Mischarmatur (DE-A1-3022706), die zu ihrer Befestigung in einem Spültisch einen Sockel mit einem Einsteckstutzen aufweist. Durch den Sockel können Bowdenzüge führen. Mit dem Sockel kann der restliche Teil des Armaturengehäuses verbunden werden.

Bei einer weiteren Spültischbatterie (DE-U1-8908214) ist unterhalb der für das Öffnen und Schließen der Armatur üblichen Mischerpatrone ein mit kurzen Zulaufrohren versehenes Distanzstück dichtend eingesetzt.

Ebenfalls bekannt ist es (DE-A1-4002852), in dem Armaturengehäuse ein zylindrisches Einsatzteil unterzubringen, auf dem die Mischerkartusche aufgesetzt ist. In dem Einsatzteil sind ein Rohrbelüftungsventil und ein Rückflussverhinderer eingesetzt.

Bei einer weiteren Einhebeleinbau-Mischarmatur (SE-A1-3726436) ist im oberen Bereich des Armaturengehäuses ein starrer mit diesem verbundener Boden vorhanden, der als Verbindungselement zwischen den Rohren und der Kartusche dient. Die Rohre sind in den Boden eingelötet.

Eine weitere Sanitärarmatur (US-A-4103709) enthält im Inneren des Gehäuses einen einstückigen Einsatz, der zur Aufnahme der Mischarmatur und der Zuleitungsrohre dient.

Bei einer weiteren Sanitärarmatur ist in den Boden eines Aufnahmeraums für eine Mischerkartusche das Ende eines Zuleitungsschlauchs eingeschraubt (US-A-5685341).

Der Erfindung liegt die Aufgabe zugrunde, eine Sanitärarmatur zu schaffen, die bei einfachem Aufbau an unterschiedliche Funktionen und Anwendungen angepasst werden kann.

Zur Lösung dieser Aufgabe schlägt die Erfindung eine Sanitärarmatur mit den Merkmalen des Anspruchs 1 vor. Weiterbildungen der Erfindung sind Gegenstand der abhängigen Ansprüche, deren Wortlaut durch Bezugnahme zum Inhalt der Beschreibung gemacht wird.

Das Basisteil ist zusammen mit dem Zwischenelement so ausgebildet dass es die Mischeinrichtung, beispielsweise eine Mischerkartusche aufnehmen kann. Das Basisteil ist so ausgebildet, dass es mit einer Befestigungseinrichtung an dem plattenförmigen Element, beispielsweise einer Spüle, angebracht werden kann. An das Basisteil wird dann das Gehäuse angebracht, das das Basisteil vollständig umgibt. Die Außenform und die Oberflächenbeschaffenheit wird daher nur durch das Gehäuse bestimmt, das keine tragenden Funktionen übernimmt. Die Flüssigkeitsverbindung zwischen den Wasser führenden Teilen, d.h. den Zuleitungen, ggf. einer weiterführenden Leitung, dem Auslauf aus der Sanitärarmatur und dem Mischventil, wird mindestens zum Teil von dem Zwischenelement übernommen. Zur Anpassung an unterschiedliche Aufgaben und Funktionen der Sanitärarmatur braucht nur das Zwischenelement entnommen und durch ein anderes Zwischenelement ersetzt zu werden. Es können daher die unterschiedlichsten Arten von Armaturen in dem Basisteil untergebracht werden. Durch Austausch des Gehäuses kann auch eine Anpassung an verschiedene Formen und Farben erfolgen.

In Weiterbildung der Erfindung kann das Basisteil einen Boden für den Anschluß der Wasserzuleitungen und ggf. eine wegführende Leitung aufweisen. Dieser Boden kann insbesondere in das Basisteil einsetzbar sein. Hierzu kann eine Halterung vorgesehen sein, beispielsweise eine einfache Schulter, auf der der Boden aufliegt.

In Weiterbildung der Erfindung kann das Zwischenelement, das in das Basisteil eingesetzt ist, einen Boden für die eigentliche Mischeinrichtung, beispielsweise eine Mischerkartusche, aufweisen oder bilden. Zur axialen Ausrichtung des Zwischenelements kann das Basisteil innen eine Schulter aufweisen, an der das Zwischenelement aufliegt.

Das Gehäuse, das das Basisteil allseits umgibt, kann ggf. an dem plattenförmigen Element, an dem das Basisteil angebracht wird, befestigt werden. Besonders günstig ist es jedoch, wenn, wie in Weiterbildung vorgesehen ist, es an dem Basisteil angebracht und ggf. auch befestigt ist.

In Weiterbildung der Erfindung kann vorgesehen sein, dass das Gehäuse und/oder das Basisteil hülsenartig ausgebildet ist.

Erfindungsgemäß kann vorgesehen sein, dass das Gehäuse gegenüber dem Basisteil abgedichtet ist.

In nochmaliger Weiterbildung der Erfindung kann vorgesehen sein, dass ein abgedichteter Raum zwischen dem Gehäuse und dem Basisteil als Wasserführung ausgebildet ist, also bei der Funktion der Sanitärarmatur beteiligt ist.

Beispielsweise kann der Raum zwischen dem Gehäuse und dem Basisteil dazu dienen, die Verbindung zu einem Auslauf zu verwirklichen, wobei dieser Auslauf insbesondere an dem Gehäuse angeordnet bzw. von diesem gebildet ist.

In nochmaliger Weiterbildung der Erfindung kann vorgesehen sein, dass das Gehäuse drehbar an dem Basisteil befestigbar ist. Dadurch kann beispielsweise der Auslauf verschwenkt werden.

Insbesondere schlägt die Erfindung vor, in die eingangs erwähnte Aufnahme eine Mischerkartusche einzusetzen, bei der es sich um eine standardisierte Mischerkartusche handeln kann. Zur Festlegung der Mischerkartusche ist eine Überwurfmutter vorgesehen, die auf das Basisteil aufgeschraubt wird und dabei die Mischerkartusche nicht nur festlegt, sondern auch axial verspannt. Das Verspannen der Mischerkartusche kann dazu ausgenutzt werden, auch den Boden zur Befestigung der Wasserleitungen und/oder das Zwischenelement zu verspannen und damit in dem Basisteil axial festzulegen.

Erfindungegemäß ist vorgesehen dass die Überwurfmutter zum Verspannen der Mischerkartusche gleichzeitig auch dazu dient, das Gehäuse an dem Basisteil axial zu sichern. Als Alternative hierzu ist vorgesehen, dass auf die Überwurfmutter, die die Mischerkartusche festlegt, eine Rosette aufschraubbar ist, die zusätzlich auch das Gehäuse an dem Basisteil axial festlegt.

Zur Befestigung der Sanitärarmatur kann erfindungsgemäß vorgesehen sein, dass diese ein in das Basisteil eingesetztes und mit diesem verbundenes Rohrelement mit einem Außengewinde aufweist. Das Rohrelement kann mit Vorteil derart mit dem Basisteil verbunden sein, dass um es herum eine in einer Ebene liegende Auflageschulter gebildet ist.

Das Rohrelement wird durch eine entsprechende Öffnung des plattenförmigen Elements hindurch gesteckt und von der gegenüberliegenden Seite mit dem plattenförmigen Element verspannt.

Als Befestigungseinrichtung kann auch ein in das Basisteil eingesetzter Stehbolzen verwendet werden.

In nochmaliger Weiterbildung der Erfindung kann vorgesehen sein, dass das Basisteil zweiteilig aufgebaut ist, insbesondere aus zwei in axialer gegenseitiger Verlängerung angeordneten Teilen. Dadurch wird es möglich, unterschiedliche Funktionen, Größen oder sonstige Veränderungen durchzuführen, wobei eines der beiden Teile gegebenenfalls auch keine andere als eine optische Funktion aufnehmen kann. Beispielsweise lassen sich höhere Armaturen herstellen.

Insbesondere kann dabei vorgesehen sein, dass die beiden Teile austauschbar aneinander gehaltert sind.

In Weiterbildung der Erfindung kann vorgesehen sein, dass einer der beiden Teile des Basisteils die Mischerkartusche aufweist, beispielsweise in der eingangs beschriebenen Auf- nahme, während das andere Teil ein Sockelteil ist. Dieses Sockelteil dient in erster Linie dazu, die Auflagefläche auf der Oberfläche zu bilden an der die Befestigung geschieht. Es kann insbesondere auch vorgesehen sein, dass das Sockelteil die Befestigungseinrichtung der Sanitärarmatur aufweist. Die Verbindung zwischen der Befestigungseinrichtung, dem Sockelteil und dem zweiten Teil des Basisgehäuses, kann so ausgebildet sein, dass man das Sockelteil einfach weglassen kann, so dass sich also die Befestigungseinrichtung in gleicher Weise mit dem Sockelteil oder mit dem zweiten Teil des Basisteils verbinden läßt.

Das Sockelteil kann in Weiterbildung zusätzliche Funktionsteile der Sanitärarmatur aufweisen, beispielsweise Betätigungseinrichtungen, Fühler für eine Näherungselektronik, Bowdenzüge für den Stopfenheber des Ablaufventils oder dergleichen.

Inbesondere kann jedoch auch vorgesehen sein, dass eines der beiden Teile des Basisteils insbesondere das Sockelteil, ein Ventil zum Absperren oder Umstellen für einen separaten Abgang aufweist. Dieser Abgang kann gegebenenfalls auch durch das Sockelteil nach außen führen. Besonders günstig ist es jedoch, wenn die Verbindung zu dem Abgang durch die Armatur hindurch auf die Unterseite der Befestigungsfläche führt. Bei diesem Ventil kann es sich um eine Geräteventil für eine Waschmaschine oder eine Spülmaschine handeln.

Das Ventil kann eine Verbindung zu den Wasserzuleitungen vor der Mischeinrichtungen der Sanitärarmatur herstellen, also beispielsweise zu der Kaltwasserzuleitung oder zu der Warmwasserzuleitung. Gegebenenfalls kann dies auch alternativ erfolgen.

Es ist aber ebenfalls möglich, dass das zusätzliche Ventil eine Verbindung zu der Mischwasserleitung der Sanitärarmatur herstellt, also stromab der Mischerkartusche angeordnet ist.

Möglich ist auch, dass das Sockelteil einen Anschluß für eine Munddusche aufweist.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Axialschnitt durch eine Sanitärarmatur nach einer ersten Ausführungsform der Erfindung;
- Fig. 2: einen Axialschnitt durch eine Sanitärarmatur nach einer zweiten Ausführungsform;
- Fig. 3: einen Axialschnitt durch eine Sanitärarmatur nach einer dritten Ausführungsform.
- Fig. 4: einen Axialschnitt durch eine vierte Ausführungsform der Erfindung und
- Fig. 5: einen Axialschnitt durch eine Armatur mit einem Zusatzventil.

In den Figuren ist schematisch die Anbringung einer Sanitärarmatur an einem plattenförmigen Element dargestellt, wobei jeweils in der linken Hälfte aller Figuren eine relativ dicke Platte 1 dargestellt ist, während in der rechten Hälfte eine dünne Platte 2 verwendet wird. Die Art der Verspannung ist bei beiden Arten von Platten ähnlich.

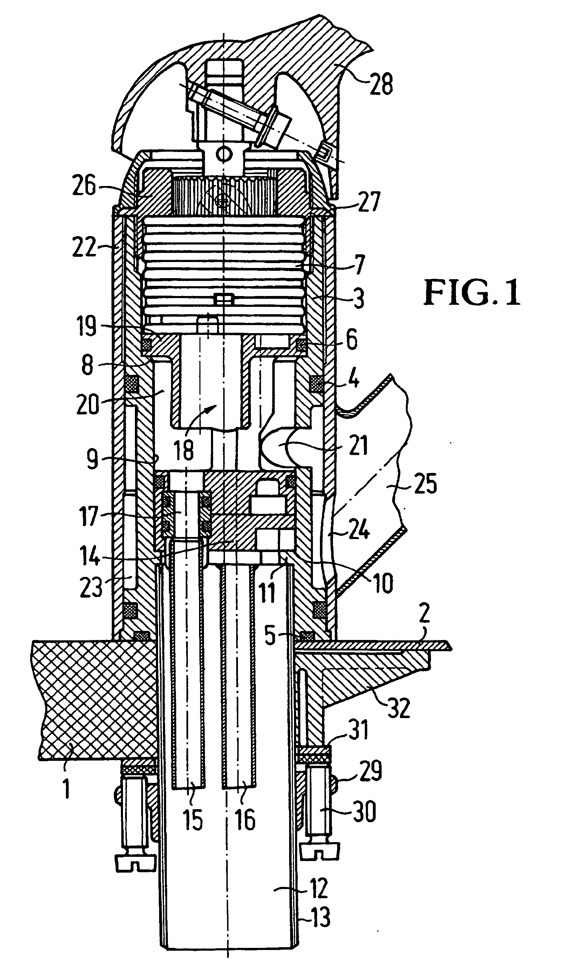

Die Sanitärarmatur der Figur 1 enthält zunächst ein Basisteil 3, das hülsenartig ausgebildet ist. Es enthält, wenn man in Figur 1 von oben anfängt, zunächst einen von einer ebenen Stirnseite ausgehenden außen kreiszylindrischen Bereich, an den sich dann ein zweiter außen kreiszylindrischer Bereich mit einem verringerten Durchmesser anschließt. Am unteren Ende wird wieder der am oberen Ende vorhandene Durchmesser eingenommen. Der Bereich mit dem verringerten Durchmesser ist von den übrigen Endbereichen durch eine umlaufende Dichtung 4 abgedichtet. Die untere Stirnfläche des Basisteils 3, die ebenfalls eine umlaufendes Dichtung 5 aufweist, ist eben ausgebildet und bildet eine Anlagefläche, mit der das Basisteil 3 auf der Oberseite der Platte 1 bzw. 2 aufliegt.

Innen enthält das Basisteil 3, wieder von oben ausgehend, zunächst eine kreiszylindrische Aufnahme 6 für eine vereinfachte dargestellte Mischerkartusche 7. Die Aufnahme 6 wird von einer Schulter 8 begrenzt, die dadurch gebildet ist, dass an dieser Stelle auch der Innendurchmesser des Basisteils 3 verringert ist. An die Schulter 8 schließt sich also wieder ein zylindrischer Innenraum 9 an, der von einer umlaufenden Ringschulter 10 begrenzt ist. Die Ringschulter 10 wird durch eine nach innen vorstehende Rippe 11 gebildet. Unterhalb der Rippe 11 ist in das Basisteil 3 ein Rohrelement 12 eingesetzt, das mit dem Basisteil 3 beispielsweise verschraubt, verschweißt oder verlötet ist. Das Rohrelement steht über die untere Anlagefläche des Basisteils 3 deutlich vor. Das Rohrelement 12 weist ein Außengewinde 13 auf.

Auf die Ringschulter 10 ist ein Boden 14 aufgelegt, der Anschlussnippel für die Zuleitungen 15, 16 aufweist. Die Zuleitungen 15, 16 sind mit ihren Enden in je einen Nippel 17 eingesetzt, der als zylindrische Hülse ausgebildet ist und an seiner Außenseite zwei Nuten zur Aufnahme je einer Dichtung aufweist. Der Nippel 17 sitzt in einer Stufenbohrung des Bodens 14 in einer solchen Weise, dass einer der beiden Dichtungsringe ihn gegenüber dem Boden 14 abdichtet. Der Nippel 17 steht über die Oberseite des Bodens 14 so weit vor, dass die andere Dichtung in eine Stufenbohrung eines darüber angeordneten Zwischenelements 18 eingreift und ihn diesem Zwischenelement gegenüber abdichtet.

Auf den Boden 14 ist von oben her in das Basisteil 3 das Zwischenelement 18 eingesetzt, das im Bereich seines unteren Endes das bereits erwähnte, mit dem Anschlußnippel 17 der Zuleitungen 15, 16 zusammenwirkende Bauteil aufweist. Aus der Figur 1 ergibt sich nicht ohne weiteres, wie dieses Zwischenelement 18 ausgebildet ist. Es ist aber zu sehen, dass dieses Zwischenelement in den Bereich des Basisteils 3 mit dem verringerten Innendurchmesser hinein passt, und dass seine axiale Position dadurch bestimmt ist, dass ein an seinem oberen Ende angeordneter Boden 19 auf der Schulter 8 aufliegt. Das Zwischenelement kann aber auch, ohne auf der Schulter aufzuliegen, durch die Kartusche auf den Boden 14 gepresst werden und diesen dadurch fixieren. Das Bauteil 18 enthält einige Verbindungskanäle, um die Verbindung zwischen den Zuleitungen 15, 16 und der Mischerkartusche 7 herzustellen. Der am oberen Ende des Zwischenelements 18 vorhandene Boden 19, der gegenüber der Innenseite des Bauteils 3 abgedichtet ist, bildet den Boden für die Mischerkartusche 7.

Zwischen dem Zwischenelement 18 und der Innenseite des Basisteils 3 ist ein Zwischenraum 20 vorhanden, in den beispielsweise das die Mischerkartusche 7 verlassende Wasser gelangen kann. Aus dem Raum 20 führt eine Öffnung 21 in dem Basisteil 3 nach außen.

Auf die zylindrische Außenseite des Basisteils 3 ist ein Gehäuse 22 von oben her aufgeschoben, das ggf. mit geringem oder auch großem Abstand die Außenseite des Basisteils 3 umgibt. Das Gehäuse kann durch die Dichtungen 4 gegenüber dem Basisteil 3 abgedichtet sein. Durch die Verringerung des Außendurchmessers des Basisteils 3 in dem Bereich zwischen den beiden umlaufenden Dichtungen wird dort ein Raum 23 zwischen dem Basisteil 3 und dem Gehäuse 22 gebildet, in den das Wasser durch die Öffnung 21 gelangt. Dieser Raum ist also in dem dargestellten Beispiel als Wasserführung ausgebildet.

Das Gehäuse 22 weist in einem Bereich, der diesem abgedichteten Raum entspricht, eine Öffnung 24 auf, die in eine Auslaufschnauze 25 führt. Die Auslaufschnauze 25, die in der Figur nur zum Teil dargestellt ist, führt zu einem Auslauf. Durch Verdrehung des Gehäuses 22 gegenüber dem Basisteil 3 kann der Auslauf 25 um die Rotationsachse des Basisteils 3 verdreht werden.

Zur Festlegung der Mischerkartusche 7 in der Aufnahme 6 des Basisteils 3 dient eine Überwurfmutter 26, die in ein Gewinde des Endbereichs der Aufnahme 6 eingeschraubt ist. Die Überwurfmutter 26 weist einen äußeren Flansch 27 auf, der in radialer Richtung über die Außenseite des Basisteils 3 vorspringt. Beim Verspannen der Mischerkartusche 7 in dem Basisteil 3 wird auch das Zwischenelement 18 gegen die Schulter 8 oder den Boden 14 verspannt. Durch das radiale Vorspringen des äußeren Flansches 27 erfolgt auch eine axiale Sicherung des Gehäuses 22 an dem Basisteil 3. Diese axiale Sicherung ist jedoch kein Verspannen, da das Gehäuse 22 sich bei der dargestellten Ausführungsform gegenüber dem Basisteil 3 verdrehen läßt. Es gibt jedoch auch Versionen, beispielsweise für einen Waschtisch, bei denen das Gehäuse gegenüber dem Basisteil nicht verdrehbar ausgebildet ist.

In Bereich der Unterseite des Basisteils 3 liegt das Gehäuse 22 auf einer Schulter des Basisteils 3 auf, so dass seine Unterseite etwa bündig mit der Anlagefläche des Basisteils 3 verläuft. Bei verdrehbarem Gehäuse muß ein Spalt zwischen der Oberfläche des Bauteils, an dem die Armatur befestigt ist, und dem Gehäuse vorhanden sein. Damit soll ein Kratzen des Gehäuses auf der Oberfläche vermieden werden.

Zur Bedienung der Mischerkartusche ist ein Bedienelement 28 vorgesehen, das nicht weiter erläutert wird. Die Mischerkartusche kann eine mit thermostatischer oder mechanischer Temperatursteuerung sein.

Zur Befestigung der Armatur an der Platte 1 bzw. 2 ist auf das Außengewinde 13 des Rohrelements 12 eine Mutter 29 aufgeschraubt, die mehrere in axialer Richtung verlaufende Gewindebohrungen aufweist. In die Gewindebohrungen sind jeweils Schrauben 30 eingeschraubt. Zwischen die Schrauben 30 und die Unterseite der Platte 1 bzw. 2 sind zwei flache Ringe 31 gelegt, die eine Verteilung des durch die Schrauben 30 ausgeübten Drucks bewirkten sollen. Durch Festziehen der Schrauben 30 wird die Armatur an der Platte 1 bzw. 2 verspannt. Bei der in den Figuren rechten Art der Befestigung ist zwischen die Ringe 31 und die Platte 2 noch ein Zwischenelement 32 eingesetzt, das bei der dünneren Platte eine größere Angriffsfläche bildet.

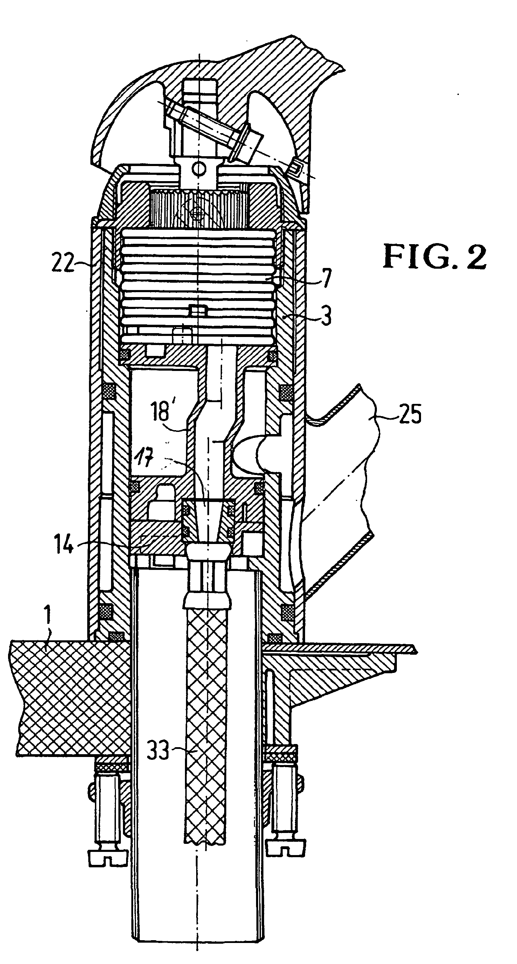

Die Ausführungsform nach der Figur 2 unterscheidet sich von der Ausführungsform nach Figur 1 zum einen dadurch, dass anstelle einer starren Zuleitung ein Zuleitungsschlauch 33 verwendet wird, der in ähnlicher Weise mit Hilfe eines Nippels 17 mit dem Boden und dem Zwischenelement 18' verbunden wird. Es wird ein unterschiedliches Zwischenelement 18' verwendet. Die übrigen Teile der Armatur sind gleich oder ähnlich, so dass sie nicht nochmals beschrieben werden.

Bei dem Vergleich der Figuren 1 und 2 ergibt sich, dass das Basisteil 3 und das Gehäuse 22 bei beiden Ausführungsformen identisch sind, wobei auch der Boden 14 identisch sein kann. Auch die Art der Befestigung an der Platte 1 bzw. 2 ist identisch. Das einzige Teil, das bei beiden Armaturen unterschiedlich ist, ist das Zwischenelement 18 sowie der ggf. der Boden 14.

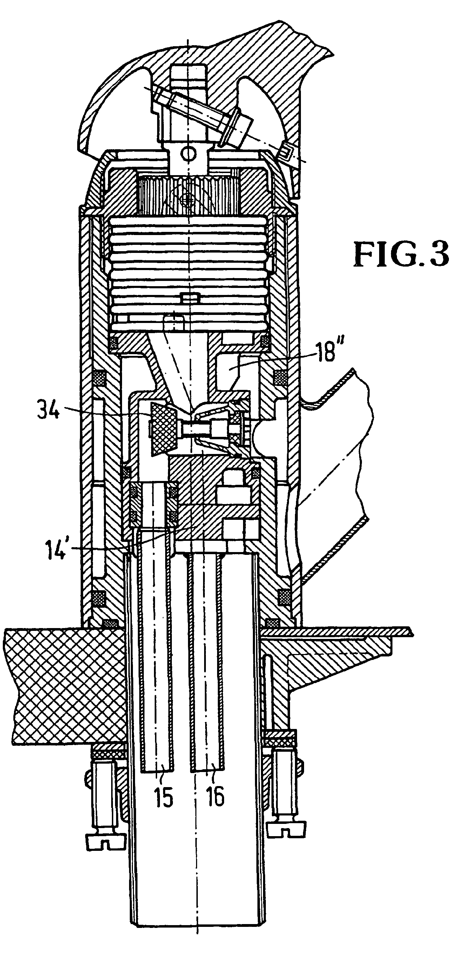

Bei der Ausführungsform der Figur 3 wird ein drittes Zwischenelement 18 " verwendet, das in diesem Fall ein Ventil 34 für eine Schlauchbrause enthält. Das Ventil 34 ist so aufgebaut, dass es sich von alleine bei Druckabfall zurückstellt. Auch hier kann man sehen, dass nur das Zwischenelement 18 und ggf. der Boden 14 für die Zuleitungen 15, 16 ausgetauscht werden muss, um ein anderes Verhalten oder eine andere Sanitärarmatur zu erhalten.

Der Boden 14 könnte auch einstückig mit dem Basisteil ausgebildet sein. Bei losem Boden 14 kann dieser ggf. mit dem Zwischenstück durch Rastverbindungen verbunden sein und zusammen mit den Anschlußrohren als Baugruppe montiert werden. Es könnte auch vorgesehen sein, die Mischerkartusche mit dem Zwischenstück in gleicher Weise zu verbinden.

Aus dem vorher Gesagten ergibt sich, dass die Sanitärarmatur nach der Erfindung durch Auswechseln weniger Teile in eine Sanitärarmatur mit einem anderen Verhalten oder mit anderen Anschlussmöglichkeiten umgebaut werden kann. Man kann auch durch Auswechseln des Gehäuses 22 ein anderes Aussehen der Armatur erhalten, beispielsweise eine andere Form oder eine andere Farbe des Gehäuses.

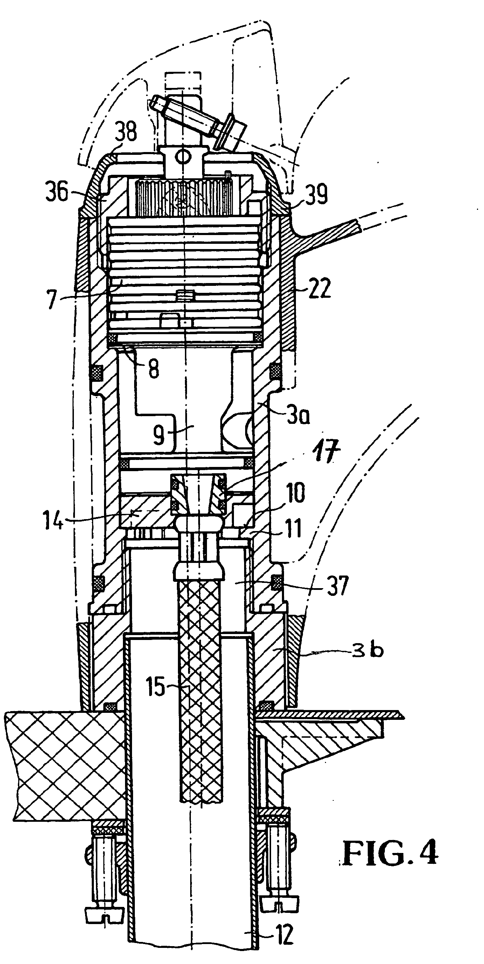

Die Figur 4 zeigt nochmals eine weitere Ausführungsform der von der Erfindung vorgeschlagenen Sanitäramatur. Das Basisteil 3 ist hier aus zwei in axialer Verlängerung angeordneten Teilen 3a und 3b aufgebaut. Das Teil 3a enthält die Aufnahme für die Mischerkartusche 7 und den Zwischenboden 14, in dem die Nippel 17 für die Zuleitungsschläuche 15 angeordnet sind. Das Basisteil besteht weiterhin aus einem Sockelteil 3b, der auf der Oberfläche der Befestigungsplatte aufliegt. Das Sockelteil 3b enthält eine Bohrung mit einem Innengewinde, in das das Befestigungsrohr 12 eingeschraubt ist. In Verlängerung zu der das Befestigungsrohr 12 aufnehmenden Bohrung enthält das Sockelteil 3b einen Ansatz 37 mit einem Außengewinde, das dem Außengewinde des Befestigungsrohrs 12 entspricht. Mit diesem Ansatz 37 ist das Sockelteil 3b in die Hälfte 3a des Basisteils eingeschraubt. Dies bedeutet, dass das Sockelteil 3b auch weggelassen werden könnte, da das Befestigungsrohr 12 direkt in das Basisteil 3a eingeschraubt werden könnte.

Das obere Teil 3a liegt auf einer Schulter des Sockelteil 3b auf. Die Außenseite des Sockelteils 3b fluchtet angenähert mit der Außenseite des Teiles 3a. Wie dies in der Zeichnung angedeutet ist, ist das Gehäuse 22 so ausgebildet, dass es sowohl das Teil 3a als auch das Sockelteil 3b des Basisteils 3 allseits umgibt.

Es wäre auch denkbar, das Sockelteil 3b mit einem größeren Außendurchmesser zu versehen und das Gehäuse 22 nur bis zur Schulter des Sockelteils 3b reichen zu lassen.

In der dargestellten Ausführungsform dient das Sockelteil 3b nur zur Verlängerung der Armatur, was beispielsweise aus optischen oder Gestaltungsgründen gewünscht sein kann. Es ist ebenfalls möglich und wird von der Erfindung vorgeschlagen, dass das Sockelteil 3b weitere Funktionen übernimmt, beispielsweise ein Zusatzgerät aufnimmt. So könnte beispielsweise ein Geräteventil für eine Waschmaschine oder eine Spülmaschine oder auch eine Betätigungseinrichtung für den Stopfenheber des Ablaufventils in diesem Sockelteil 3b untergebracht werden. Auch Fühler für eine Näherungselektronik oder sonstige Sensoren könnten hier untergebracht werden.

Die Überwurfmutter 36 ist so gestaltet, dass sie nur die Mischerkartusche 7 in dem Basisteil 3a festlegt. Die Überwurfmutter 36 weist ein Außengewinde auf, das auch nach Festlegemitteln der Kartusche noch zugänglich ist. Auf dieses Außengewinde ist eine Rosette 38 aufgeschraubt, die mit ihrem Rand 39 über das Basisteil 3 in radialer Richtung übersteht und dadurch das Gehäuse 22 gegen ein Abheben nach oben sichert.

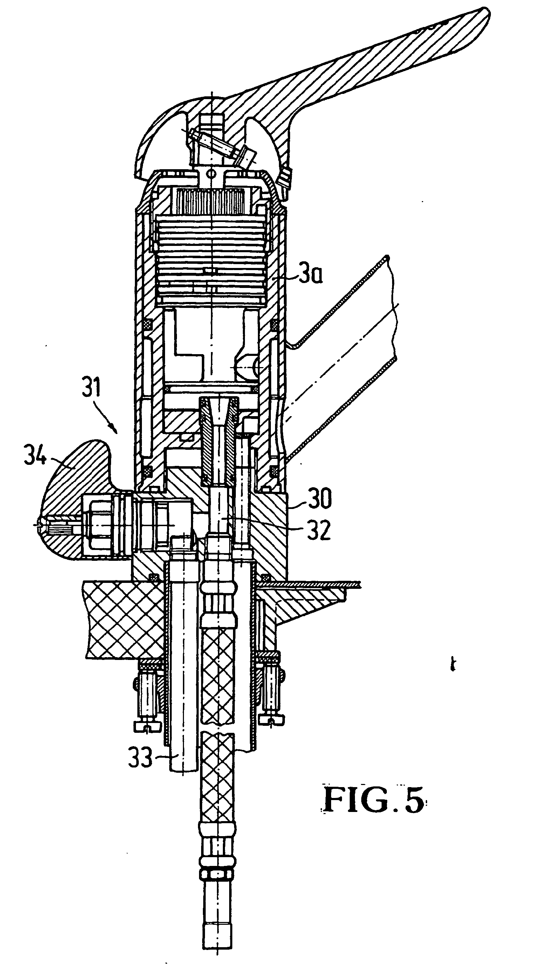

Nun zu der Ausführungsform nach Figur 5. Der Aufbau dieser Sanitärarmatur ist ähnlich der in Figur 4 dargestellten, so dass jetzt nur noch die Unterschiede erläutert werden.

Wieder ist das Basisteil aus zwei in axialer Verlängerung angeordneten Teilen aufgebaut, von denen das Sockelteil 30 jetzt ein anderes Innenleben aufweist. Es ist aber in seinen Außenabmessungen der Ausführungsform nach Figur 4 ähnlich, d. h. es kann in das identische zweite Teil 3a des Sockelteils 3 eingeschraubt werden. Auch die Befestigung an der Platte mit Hilfe einer Gewindehülse geschieht in der gleichen Weise wie bei den vorhergehenden Ausführungsformen.

In den Sockel 30 ist ein Absperrventil 31 enthalten, das es ermöglicht, eine Verbindung zwischen der Kaltwasserzuleitung, die in einen Kanal 32 führt, und einem zusätzlichen Abgang 33 herzustellen. Dieser zusätzliche Abgang 33, im dargestellten Beispiel eine Kupferleitung, führt durch die Befestigungsöffnung und die Armatur wieder auf die untere Seite der Tischplatte, an der die Befestigung erfolgt ist. An der der Auslaufschnauze abgewandten Rückseite des Sockels 30 ist ein Betätigungsgriff 34 für das Absperrventil 31 angeordnet. Es handelt sich um einen Knebelgriff, der um eine senkrecht zur Längsachse der Armatur verlaufende Achse verdreht werden kann. Das Absperrventil 31 dient zur Versorgung beispielsweise einer Spülmaschine mit Wasser. Es kann ggf. auch als Absperr- und Umstellventil ausgebildet sein, so dass der Benutzer wählen kann, ob er seine Spülmaschine oder seine Waschmaschine zunächst mit warmen Wasser versorgen will, oder auch mit kaltem Wasser.

Es ist ebenfalls denkbar, das Ventil so auszubilden, dass es mit Mischwasser stromab der Mischerkartusche versorgt wird. An Stelle des einen Absperrventils 31 können auch ggf. mehrere Ventile vorgesehen sein.

In dem Sockelteil kann ein Zusatzanschluß vorgesehen sein, der etwa radial aus dem Sockelteil herausführt. Hier kann beispielsweise eine Munddusche angeschlossen werden.

## Patentansprüche

1. Sanitärarmatur, mit
1.1 einem Basisteil (3), das
1.1.1 eine Aufnahme (6) für eine Mischereinrichtung und
1.1.2 eine Einrichtung zur Befestigung an einem plattenförmigen Element (1, 2) aufweist,
1.2 einem Zwischenelement (18), das
1.2.1 in das Basisteil (3) einsetzbar ist und
1.2.2 die hydraulische und/oder mechanische Verbindung zwischen den Wasser führenden Teilen der Sanitärarmatur herstellt, sowie mit
1.3 einem Gehäuse (22), das
1.3.1 das Basisteil (3) allseitig umgibt, sowie mit
1.4 einer Überwurfmutter (26) zur axialen Festlegung der Mischerkartusche (7) in dem Basisteil (3),
**dadurch gekennzeichnet, dass**.
1.5 eine Rosette ((38) auf die Überwurfmutter (36) aufschraubbar ist und das Gehäuse (22) an dem Basisteil (3) festlegt, oder
1.6 die Überwurfmutter (36) sowohl die Mischerkartusche (7) als auch das Gehäuse axial festlegt.

2. Sanitärarmatur nach Anspruch 1, bei der in dem Basisteil (3) ein Boden (14) für den Anschluss der Wasserzuleitungen (15, 16) und ggf. eine wegführende Leitung eingesetzt ist.

3. Sanitärarmatur nach Anspruch 1 oder 2, bei der der Boden (14) auf einer Schulter (10) aufliegt.

4. Sanitärarmatur nach einem der vorhergehenden Ansprüche, bei der das Zwischenelement (18) einen Boden (19) für eine Mischerkartusche (7) bildet bzw. aufweist.

5. Sanitärarmatur nach einem der vorhergehenden Ansprüche, bei der das Zwischenelement (18) auf einer Schulter (8) aufliegt.

6. Sanitärarmatur nach einem der vorhergehenden Ansprüche, bei der das Gehäuse (22) an dem Basisteil (3) festgelegt ist.

7. Sanitärarmatur nach einem der vorhergehenden Ansprüche, bei der das Gehäuse (22) und/oder das Basisteil (3) hülsenartig ausgebildet sind.

8. Sanitärarmatur nach einem der vorhergehenden Ansprüche, bei der das Gehäuse (22) gegenüber dem Basisteil (3) abgedichtet ist.

9. Sanitärarmatur nach einem der vorhergehenden Ansprüche, bei der ein abgedichteter Raum zwischen dem Gehäuse (22) und dem Basisteil (3) Wasser führend ausgebildet ist.

10. Sanitärarmatur nach einem der vorhergehenden Ansprüche, bei der das Gehäuse (22) einen Auslauf (25) aufweist bzw. bildet, insbesondere einstückig.

11. Sanitärarmatur nach einem der vorhergehenden Ansprüche, bei der das Gehäuse (22) drehbar an dem Basisteil (3) befestigt ist.

12. Sanitärarmatur nach einem der vorhergehenden Ansprüche, bei der die Befestigungseinrichtung ein in das Basisteil (3) eingesetztes und mit diesem verbundenes Rohrelement (12) mit einem Au-ßengewinde (13) aufweist.

13. Sanitärarmatur nach einem der Ansprüche 1 bis 11, bei der die Befestigungseinrichtung einen in das Basisteil (3) eingesetzten Stehbolzen aufweist.

14. Sanitärarmatur nach einem der vorhergehenden Ansprüche, bei der das Basisteil (3) eine Anlageschulter zur Anlage an einem plattenförmigen Element (1, 2) aufweist.

15. Sanitärarmatur nach einem der vorhergehenden Ansprüche, bei der die Befestigungseinrichtung einstückig mit dem Basisteil (3) ist.

16. Sanitärarmatur nach einem der vorhergehenden Ansprüche, bei der das Basisteil (3) zweiteilig aus zwei in axialer Verlängerung angeordneten Teilen (3a, 3b) aufgebaut ist, wobei insbesondere eines der beiden Teile (3b) austauschbar an dem Anderen (3a) gehaltert ist.

17. Sanitärarmatur nach Anspruch 16, bei der eines der beiden Teile des Basisteils (3) die Aufnahme (6) für die Mischerkartusche (7) aufweist, während das andere Teil (3b) ein Sockelteil ist.

18. Sanitärarmatur nach Anspruch 17, bei der das Sockelteil (3b) die Befestigungseinrichtung der Sanitärarmatur aufweist.

19. Sanitärarmatur nach Anspruch 17 oder 18, bei der das Sockelteil (3b) zusätzliche Funktionsteile der Sanitärarmatur aufweist.

20. Sanitärarmatur nach einem der Ansprüche 16 bis 19, bei der das Gehäuse (22) beide Teile (3a, 3b) des Basisteils (3) umgibt.

21. Sanitärarmatur nach einem der Ansprüche 16 bis 19, bei der das Gehäuse (22) nur einen Teil (3a) des Basisteils (3) umgibt und das andere Teil (3b) des Basisteils (3) im wesentlichen vollständig frei lässt.

22. Sanitärarmatur nach einem der Ansprüche 16 bis 21, bei der eines der beiden Teile des Basisteils (3), insbesondere das Sockelteil (30), mindestens ein Absperr- und/oder Umstellerventil (31) für einen separaten Abgang (33) aufweist, der vorzugsweise durch die Armatur hindurch auf die Befestigungsseite führt.

23. Sanitärarmatur nach Anspruch 22, bei der das Ventil (31) bzw. die Ventile zur Herstellung einer Verbindung zwischen der Kaltwasserleitung, der Warmwasserleitung oder der Mischwasserleitung und dem separaten Abgang (33) ausgebildet ist/sind.

24. Sanitärarmatur nach einem der Ansprüche 16 bis 23, bei der das Sockelteil (3b, 30) einen Zusatzanschluss, beispielsweise einen Mundduschenanschluss aufweist, der vorzugsweise am Umfang des Sockelteils (3b, 30) mündet.

## Revendications

1. Armature sanitaire avec
1.1 une base (3)
1.1.1 qui présente une cavité (6) pour un dispositif mitigeur et
1.1.2 un dispositif de fixation à un élément en forme de plaque (1, 2),
1.2 un élément intermédiaire (18)
1.2.1 qui peut être inséré dans la base (3) et
1.2.2 qui constitue la liaison hydraulique et/ou mécanique entre les parties de l'armature qui conduisent l'eau, ainsi qu'avec
1.3 un boîtier (22)
1.3.1 qui entoure la base (3) de toutes parts et
1.4 un écrou-raccord (26) pour la fixation axiale de la cartouche mitigeuse (7) dans la base (3),
**caractérisée en ce que**
1.5 une rosette (38) peut être vissée sur l'écrou-raccord (36) et fixe le boîtier (22) sur la base (3) ou
1.6 fixe l'écrou-raccord (36), la cartouche mitigeuse (7) et le boîtier en direction axiale.

2. Armature sanitaire selon la revendication 1, dans laquelle un fond (14) pour le raccordement des conduites d'eau (15, 16) et, éventuellement, une conduite de dérivation, est inséré dans la base (3).

3. Armature sanitaire selon la revendication 1 ou 2, dans laquelle le fond (14) est posé sur un épaulement (10).

4. Armature sanitaire selon l'une quelconque des revendications précédentes, dans laquelle l'élément intermédiaire (18) constitue ou présente un fond (18) pour une cartouche mitigeuse (7).

5. Armature sanitaire selon l'une quelconque des revendications précédentes, dans laquelle l'élément intermédiaire (18) est posé sur un épaulement (8).

6. Armature sanitaire selon l'une quelconque des revendications précédentes, dans laquelle le boîtier (22) est fixé sur la base (3).

7. Armature sanitaire selon l'une quelconque des revendications précédentes, dans laquelle le boîtier (22) et/ou la base (3) est constitué d'un manchon.

8. Armature sanitaire selon l'une quelconque des revendications précédentes, dans laquelle le boîtier (22) est étanche par rapport à la base (3).

9. Armature sanitaire selon l'une quelconque des revendications précédentes, dans laquelle un espace étanche conducteur d'eau est constitué entre le boîtier (22) et la base (3).

10. Armature sanitaire selon l'une quelconque des revendications précédentes, dans laquelle le boîtier (22) présente ou constitue un écoulement (25), en particulier en une seule pièce.

11. Armature sanitaire selon l'une quelconque des revendications précédentes, dans laquelle le boîtier (22) est fixé de manière pivotante sur la base (3).

12. Armature sanitaire selon l'une quelconque des revendications précédentes, dans laquelle le dispositif de fixation présente un élément en tuyau (12) inséré dans la base (3) et relié à celle-ci avec un filet extérieur (13).

13. Armature sanitaire selon l'une quelconque des revendications 1 à 11, dans laquelle le dispositif de fixation présente un boulon fileté inséré dans la base (3).

14. Armature sanitaire selon l'une quelconque des revendications précédentes dans laquelle la base (3) présente un épaulement annexe pour le raccordement à un élément en forme de plaque (1, 2).

15. Armature sanitaire selon l'une quelconque des revendications précédentes, dans laquelle le dispositif de fixation constitue une seule pièce avec la base (3).

16. Armature sanitaire selon l'une quelconque des revendications précédentes, dans laquelle la base (3) est constituée de deux parties (3a, 3b) disposées en prolongement axial, avec en particulier une des deux parties (3b) maintenue de façon amovible contre l'autre (3a).

17. Armature sanitaire selon la revendication 16, dans laquelle une des deux parties de la base (3) présente la cavité (6) pour la cartouche mitigeuse (7), tandis que l'autre partie (3b) constitue un socle.

18. Armature sanitaire selon la revendication 17, dans laquelle le socle (3b) présente le dispositif de fixation de l'armature sanitaire.

19. Armature sanitaire selon la revendication 17 ou 18, dans laquelle le socle (3b) présente des pièces fonctionnelles supplémentaires de l'armature sanitaire.

20. Armature sanitaire selon l'une quelconque des revendications 16 à 19, dans laquelle le boîtier (22) entoure les deux parties (3a, 3b) de la base (3).

21. Armature sanitaire selon l'une quelconque des revendications 16 à 19, dans laquelle le boîtier (22) n'entoure qu'une partie (3a) de la base (3) et l'autre partie (3b) de la base (3) est fondamentalement libre.

22. Armature sanitaire selon l'une quelconque des revendications 16 à 21, dans laquelle une des deux parties de la base (3), en particulier le socle (30), présente au moins une soupape d'arrêt et/ou d'ajustement (31) pour une sortie distincte (33) qui conduit de préférence, à travers l'armature, du côté de la fixation.

23. Armature sanitaire selon la revendication 22, dans laquelle la soupape (31) est conçue ou les soupapes sont conçues pour créer une liaison entre la conduite d'eau froide, la conduite d'eau chaude ou la conduite d'eau mitigée et la sortie distincte (33).

24. Armature sanitaire selon l'une quelconque des revendications 16 à 23, dans laquelle le socle (3b, 30) présente un raccordement supplémentaire, par exemple un raccordement de pommeau de douche qui aboutit de préférence sur le pourtour du socle (3b, 30).

## Claims

1. A plumbing fixture having
1.1 a base (3) having
1.1.1 a receptacle (6) for a mixer device and
1.1.2 a device for fastening it to a plate (1, 2),
1.2 an insert (18) that
1.2.1 may be inserted into the base (3) and
1.2.2 generates the hydraulic and/or mechanical joint interconnecting the water-carrying components of the plumbing fixture,
1.3 a housing (22) that
1.3.1 surrounds the base (3) on all sides, and
1.4 a cap nut (36) for axially retaining the mixer cartridge (7) within the base (3), wherein
1.5 a collar (38) may be screwed onto the cap nut (36) and fastens the housing (22) to the base (3), or
1.6 the cap nut (36) axially retains both the mixer cartridge (7) and the housing in place.

2. A plumbing fixture according to claim 1, wherein a plate (14) for attaching water supply lines (15, 16) and a return line, if any, is employed.

3. A plumbing fixture according to claim 1 or claim 2, wherein the plate (14) rests on a shoulder (10).

4. A plumbing fixture according to any of the foregoing claims, wherein the insert (18) has, or forms, an abutment (19) for a mixture cartridge (7).

5. A plumbing fixture according to any of the foregoing claims, wherein the insert (18) rests on a shoulder (8).

6. A plumbing fixture according to any of the foregoing claims, wherein the housing (22) is fastened to the base (3).

7. A plumbing fixture according to any of the foregoing claims, wherein the housing (22) and/or the base (3) are configured in the form of sleeves.

8. A plumbing fixture according to any of the foregoing claims, wherein the housing (22) is sealed to the base (3).

9. A plumbing fixture according to any of the foregoing claims, wherein a sealed chamber conducting water is formed between the housing (22) and the base (3).

10. A plumbing fixture according to any of the foregoing claims, wherein the housing (22) has, or forms, an outlet (25), where, in particular, it, together with the latter, form a monolithic structure.

11. A plumbing fixture according to any of the foregoing claims, wherein the housing (22) is fastened to the base (3) such that it may be rotated with respect to the latter.

12. A plumbing fixture according to any of the foregoing claims, wherein the fastening device has a tubular component (12) having an external thread (13) that is inserted into the base (3) and joined thereto.

13. A plumbing fixture according to any of claims 1-11. wherein the fastening device has a stud that is inserted into the base (3).

14. A plumbing fixture according to any of the foregoing claims, wherein the base (3) has a shoulder that abuts against a plate (1, 2).

15. A plumbing fixture according to any of the foregoing claims, wherein the fastening device, together with the base (3), form a monolithic structure.

16. A plumbing fixture according to any of the foregoing claims, wherein the base (3) is a two-part structure configured from a pair of parts (3a, 3b) arranged in the form of axial extensions of one another, where, in particular, one of those parts (3b) is retained by the other (3a) such that it is replaceable.

17. A plumbing fixture according to claim 16, wherein one of the pair of parts forming the base (3) has the receptacle (6) for the mixer cartridge (7), while the other (3b) is a pedestal.

18. A plumbing fixture according to claim 17, wherein the pedestal (3b) has the mechanism for fastening the plumbing fixture in place.

19. A plumbing fixture according to claim 17 or claim 18, wherein the pedestal (3b) has additional functional components of the plumbing fixture.

20. A plumbing fixture according to any of claims 16 - 19, wherein the housing (22) surrounds both parts (3a, 3b) of the base (3).

21. A plumbing fixture according to any of claims 16 - 19, wherein the housing (22) surrounds just one part (3a) of the base (3) and the other part (3b) of the base (3) is left essentially unenclosed.

22. A plumbing fixture according to any of claims 16- 21, wherein one of the pair of parts forming the base (3), in particular, the pedestal (30), has at least one shutoff and/or switching valve (31) for a separate outlet (33) that preferably passes through the plumbing fixture and terminates on that end thereof that is used for fastening it in place.

23. A plumbing fixture according to claim 22, wherein the valve (31), or valves, is/are configured for generating an interconnection between the cold-water line, the hot-water line or mixed-hot-and-cold-water line, and the separate outlet (33).

24. A plumbing fixture according to any of claims 16 - 23, wherein the pedestal (3b, 30) has an auxiliary fitting, for example, a fitting for connecting an oral-cleansing device, that preferably terminates on the perimeter of the pedestal (3b, 30).
